# EUROPEAN PATENT SPECIFICATION

(11) **EP 1 914 761 B1**
(45) Date of publication and mention of the grant of the patent: **15.08.2012**
(21) Application number: 07019938.5
(22) Date of filing: 11.10.2007
(51) Int. Cl.: H01F 7/16, H01H 33/66

(54) **Actuator**
Stellantrieb
Actionneur

(30) Priority: 17.10.2006 KR 20060101060
(43) Date of publication of application: 23.04.2008
(73) Proprietor: LS Industrial Systems Co., Ltd, Jung-Gu Seoul (KR)
(72) Inventor: Sohn, Jong-Mahn, Cheongju Chungcheongbuk-do (KR)
(74) Representative: Lang, Johannes

(56) References cited:
- EP-A- 0 871 192
- KR-A- 20010 056 691
- US-A- 4 896 127
- US-A1- 2006 208 591

## Description

### BACKGROUND OF THE INVENTION

### 1. Field of the Invention

The present disclosure relates to an actuator, and more particularly, to an actuator capable of obtaining an air gap of a movable core and preventing collision between metallic members when being driven.

### 2. Description of the Background Art

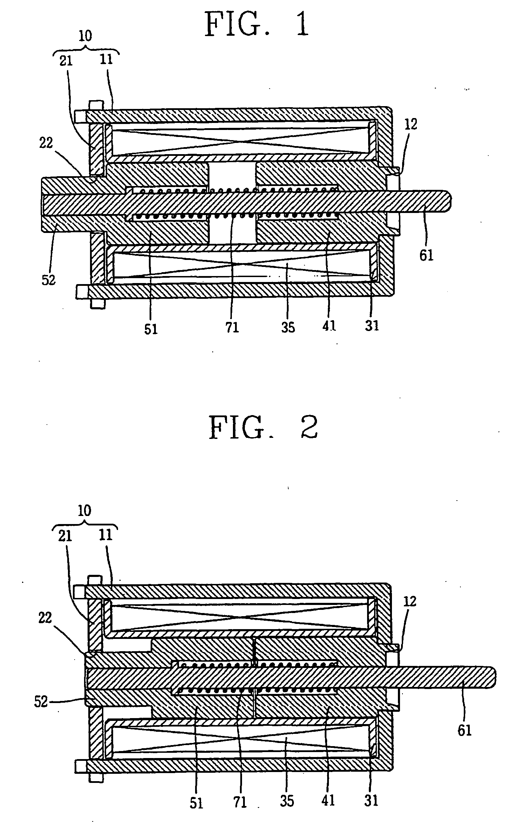

FIG. 1 is a sectional view showing an actuator in accordance with the conventional art, and FIG. 2 is a view showing an operation of the actuator of FIG. 1.

As shown, the actuator comprises a yoke 10 having a receiving space therein, a bobbin 31 disposed in the yoke 10, a coil 35 wound on a circumference of the bobbin 31 and generating a magnetic force, a fixed core 41 fixedly disposed at an inner side of the bobbin 31, and a movable core 51 disposed in the bobbin 31 so as to be closer or distant to/from the fixed core 41.

The yoke 10 includes a frame 11 having a 'U'-shaped section of which one side is opened, and a yoke plate 21 coupled to the frame 11 so as to cover the opened portion of the frame 11. The yoke 10 is formed of a magnetic substance so as to form a magnetic path.

A through hole 12 is formed at one end of the frame 11, and one end of the fixed core 41 is insertion-coupled to the through hole 12. A spring 71 for providing an elastic force so that the movable core 51 can be distant from the fixed core 41 is disposed between the fixed core 41 and the movable core 51.

An insertion portion 52 is disposed at one side of the movable core 51 so as to be inserted into a through hole 22 penetratingly formed at the center of the yoke plate 21. One end of a rod 61 is coupled to the center of the movable core 51, and another end of the rod 61 is outwardly protruding by penetrating the fixed core 41.

When power is supplied to the coil 35, the movable core 51 is moved in a direction that a magnetic resistance is decreased, that is, is moved towards the fixed core 41. Accordingly, the rod 61 is more outwardly protruding from the yoke 10. When the power supplied to the coil 35 is cut off, the movable core 51 is moved in a direction separated from the fixed core 41 by an elastic force of the spring 71, and the rod 61 is restored to its original position.

However, the conventional actuator has the following problems.

If the movable core 51 and the yoke plate 21 come in contact with each other (that is, there is no air gap between the movable core 51 and the yoke plate 21), when power is supplied to the coil 35, the movable core 51 does not rapidly move to the fixed core 41.

Furthermore, when the movable core 51 is restored to its original position by an elastic force of the spring 71 or a reset device (not shown), the movable core 51 of a metallic material collides with the yoke plate 21 of a metallic material thereby to cause noise and deformation.

Besides, the movable core 51 comes in contact with the yoke 10 when being moved, thereby occurring a metallic friction and noise.

US 2006/0208591 A1 discloses an actuator using a permanent magnet. The functional unit with the bobbin coil, the stator, the mover and the spring is surrounded by two cores. A bearing assures the proper gliding of the mover and a rod portion between the cores.

US 4 896 127 discloses a lagged type solenoid with a frame, a magnetic coil and a plunger.

### SUMMARY OF THE INVENTION

The above problems are solved by an actuator according to claim 1 of the present invention. Advantageous embodiments of the present invention are claimed in the dependent claims.

Therefore, an object of the present disclosure is to provide an actuator capable of rapidly moving a movable core when a magnetic force is generated.

Another object of the present disclosure is to provide an actuator capable of preventing collision between metallic members.

Still another object of the present disclosure is to provide an actuator capable of rapidly moving a movable core when a magnetic force is generated, preventing collision between metallic members, and facilitating an assembly process.

To achieve these and other advantages and in accordance with the purpose of the present disclosure, as embodied and broadly described herein, there is provided an actuator, comprising: a yoke having a receiving space therein; a bobbin disposed in the yoke and having a cavity; a coil wound on a circumference of the bobbin and generating a magnetic force; a fixed core fixedly disposed at one inner side of the bobbin; a movable core disposed at another inner side of the bobbin; and a separating portion formed of a non-metallic material, and interposed between the yoke and the movable core for separation therebetween, and the separating portion is integrally formed at the bobbin.

The yoke may include a frame having a section of which one side is opened, and a yoke plate coupled to the frame so as to cover the opened portion of the frame. A through hole for inserting a part of the movable core may be formed at the frame.

The separating portion may be protruding in the cavity of the bobbin.

An insertion portion inserted into the through hole may be formed at the bobbin.

A damping member may be interposed between the movable core and the separating portion.

The damping member may be formed of a rubber material, and may have a ring shape.

The separating portion may be implemented as a damping member interposed between the movable core and the yoke.

The damping member may be formed of a rubber material, and may have a ring shape.

The separating portion may include a body inserted into a through hole formed at the yoke, and a flange outwardly extending from an end of the body in a radial direction.

The actuator may further comprise a damping member coupled to the movable core so as to come in contact with the separating portion.

The separating portion may be a plate-type one disposed between the yoke and the bobbin, and a through hole for passing a part of the movable core may be formed at the center of the separating portion.

The actuator may comprise a spring for providing an elastic force so that the movable core can be separated from the fixed core; and a separating portion formed of a non-metallic material, and interposed between the yoke and the movable core for separation therebetween.

A through hole for inserting a part of the movable core may be formed at the yoke.

The separating portion may be protruding from inside of the bobbin.

The actuator may further comprise a damping member coupled to a circumference of the movable core so as to come in contact with the separating portion.

The separating portion may be implemented as a damping member elastically coupled to a circumference of the movable core so as to come in contact with the yoke.

The actuator may further comprise a housing coupled to one side of the yoke, and a cover coupled to another side of the yoke so that the yoke can be disposed between the housing and the cover.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a sectional view showing an actuator in accordance with the conventional art;
FIG. 2 is a view showing an operation of the actuator of FIG. 1;
FIG. 3 is a sectional view showing an actuator according to a first embodiment of the present invention;
FIG. 4 is an exploded perspective view of the actuator of FIG. 3;
FIG. 5 is a view showing an operation of the actuator of FIG. 3;
FIG. 6 is a sectional view showing an actuator according to a second embodiment of the present invention;
FIG. 7 is a view showing an operation of the actuator of FIG. 6;
FIG. 8 is a sectional view showing an actuator according to a third embodiment of the present invention; and
FIG. 9 is a sectional view showing an actuator according to a fourth embodiment of the present invention.

### DETAILED DESCRIPTION OF THE INVENTION

Reference will now be made in detail to the preferred embodiments of the present disclosure, examples of which are illustrated in the accompanying drawings.

Hereinafter, an actuator according to a first embodiment of the present invention will be explained in more detail.

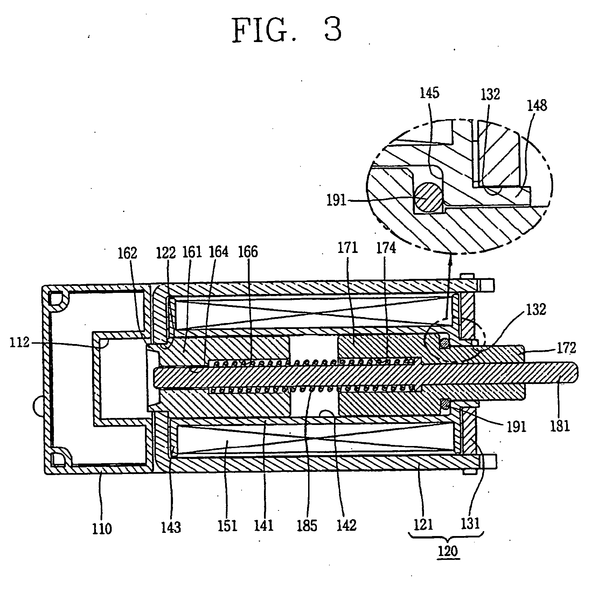

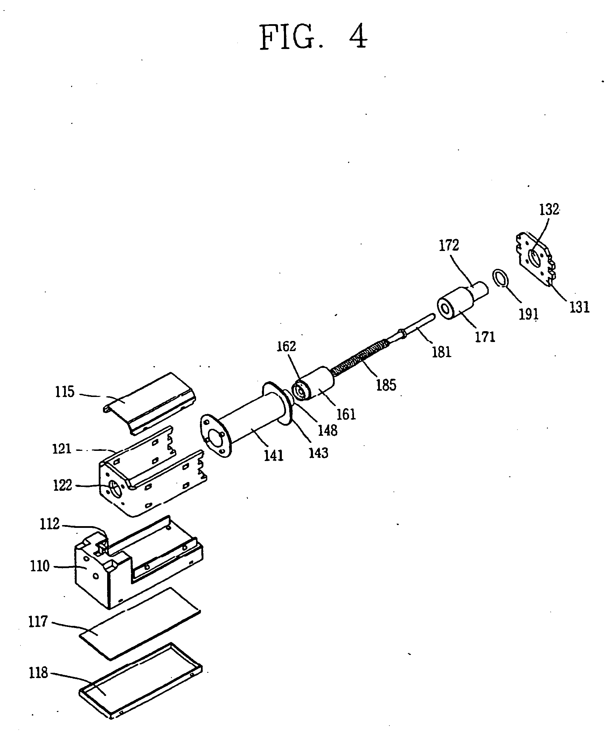

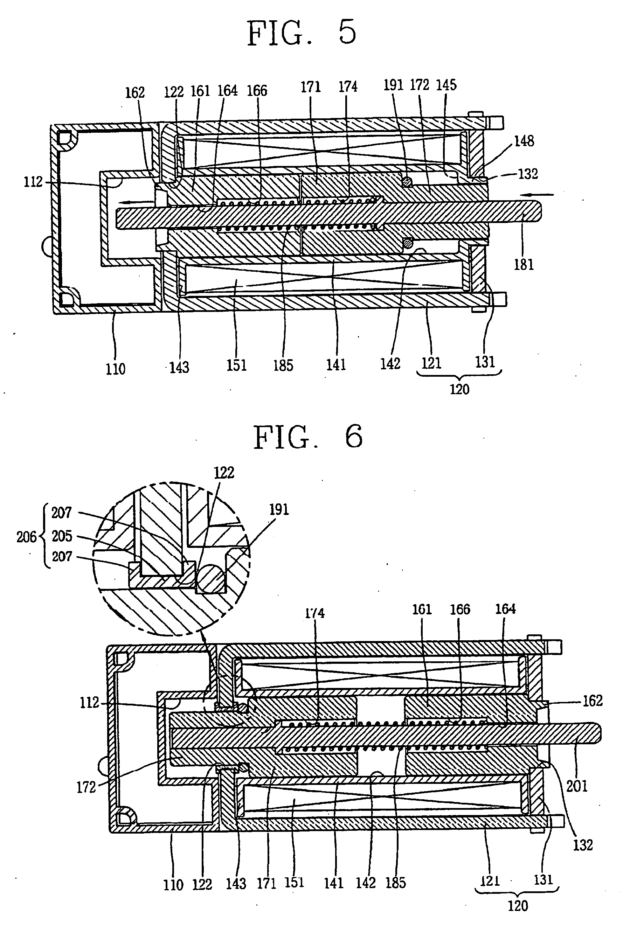

FIG. 3 is a sectional view showing an actuator according to a first embodiment of the present invention, FIG. 4 is an exploded perspective view of the actuator of FIG. 3, and FIG. 5 is a view showing an operation of the actuator of FIG. 3.

As shown, the actuator according to the first embodiment of the present invention comprises: a yoke 120 having a receiving space therein; a bobbin 141 disposed in the yoke 120 and having a cavity 142; a coil 151 wound on a circumference of the bobbin 141 and generating a magnetic force; a fixed core 161 fixedly disposed at one inner side of the bobbin 141; a movable core 171 disposed at another inner side of the bobbin 141; and a separating portion 145 formed of a non-metallic material, and interposed between the yoke 120 and the movable core 171 for separation therebetween.

The yoke 120 is formed of a magnetic substance so as to form a magnetic path. The yoke 120 includes a frame 121 having a receiving space therein, and having a 'U'-shaped section of which one side is opened; and a yoke plate 131 coupled to the frame 121 so as to cover the opened portion of the frame 121. The frame 121 is formed so that three sides thereof can be opened. A through hole 122 is disposed at one end of the frame 121 in a longitudinal direction. The yoke plate 131 is coupled to one end of the frame 121 in a longitudinal direction. A through hole 132 for inserting a part of the movable core 171 is formed at the center of the yoke plate 131.

A housing 110 formed of an insulating member is coupled to one side of the yoke 120 in a thickness direction, and a cover 115 formed of an insulating member is coupled to another side of the yoke 120, thereby protecting the coil 151 disposed in the yoke 120. A PCB 117 is disposed below the housing 110, and a PCB cover 118 for protecting the PCB 117 is coupled to a lower side of the housing 110. A receiving portion 112 for receiving a rod 181 to be later explained is formed at one side of the housing 110.

The bobbin 141 is disposed in the yoke 120, and the coil 151 is wound on a circumference of the bobbin 141 so as to generate a magnetic force when power is supplied thereto.

The bobbin 141 is formed of an insulating synthetic material, and has a cylindrical shape having the cavity 142 therein so as to form a receiving space. A flange 143 outwardly protruding in a radial direction and extending in a circumferential direction are disposed at both ends of the bobbin 141.

The fixed core 161 and the movable core 171 each formed of a magnetic substance are received in the bobbin 141. The movable core 171 is disposed at a side of the yoke plate 131, and the fixed core 161 is disposed to be spaced from the movable core 171. A protrusion 172 having a radius smaller than that of the movable core 171 and extending from the movable core 171 in a longitudinal direction is formed at one end of the movable core 171 in a longitudinal direction. The protrusion 172 is outwardly protruding by penetrating the yoke plate 131.

The rod 181 is inserted into the center of the movable core 171, and one end of the rod 181 is outwardly protruding by penetrating the protrusion 172. Another end of the rod 181 is slidably inserted into the center of the fixed core 161.

A coupling portion162 having a radius smaller than that of the fixed core 161 and outwardly extending from the fixed core 161 is disposed at one end of the fixed core 161. The coupling portion 162 is insertion-coupled to the through hole of the frame 121. A rod hole 164 for slidably inserting the rod 181 is penetratingly formed at the center of the fixed core 161.

A spring 185 for supplying an elastic force in a direction that the movable core 171 and the fixed core 161 are spaced from each other is interposed between the movable core 171 and the fixed core 161. Spring receiving portions 166 and 174 for inserting each end of the spring 185 with a certain depth are formed at the fixed core 161 and the movable core 171.

The separating portion 145 for forming an air gap between the movable core 171 and the yoke 120 is disposed at the bobbin 141. The separating portion 145 may be protruding from inside of the cavity 142 of the bobbin 141 so as to come in contact with the movable core 171. The insertion portion 148 is disposed at one side of the separating portion 145 so as to be inserted into the through hole 132 of the yoke plate 131. Accordingly, collision between the movable core 171 of a metallic material and the yoke plate 131 of a metallic material is prevented when the movable core 171 performs a sliding motion.

A damping member 191 for preventing a contact between the movable core 171 and the separating portion 145 is disposed between the movable core 171 and the separating portion 145. The damping member 191 serves to prevent damage of the separating portion 145 due to collision with the movable core 171 when the movable core 171 is restored to its original position. The damping member 191 is formed of an elastic member that can attenuate an impact. The damping member 191 may be formed of a synthetic resin material or a rubber material. The damping member 191 may be formed of a rubber material, and may have a ring shape. The damping member 191 is formed to have an inner diameter smaller than an outer diameter of the protrusion 172, and is coupled to the protrusion 172. Accordingly, the damping member 191 is elastically coupled to the outer diameter of the protrusion 172 by its own elasticity, thereby requiring no additional fixing means or tool.

As shown in FIG. 5, when power is supplied to the coil 151, the movable core 171 is moved in a direction that a magnetic resistance is decreased, that is, is moved towards the fixed core 161. Accordingly, the rod 181 is pulled towards the yoke plate 131. Since the movable core 171 is spaced from the yoke plate 131 by the separating portion 145 and the damping member 191, the movable core 171 can be rapidly moved. When the movable core 171 is moved towards the fixed core 161, the spring 185 accumulates an elastic force. When power supplied to the coil 151 is cut-off, the movable core 171 is restored to its original position by an elastic force of the spring 185. Here, the damping member 191 prevents the movable core 171 from colliding with the separating portion 145. Also, a metallic friction between the protrusion 172 and the yoke plate 131 is prevented by the insertion portion 148.

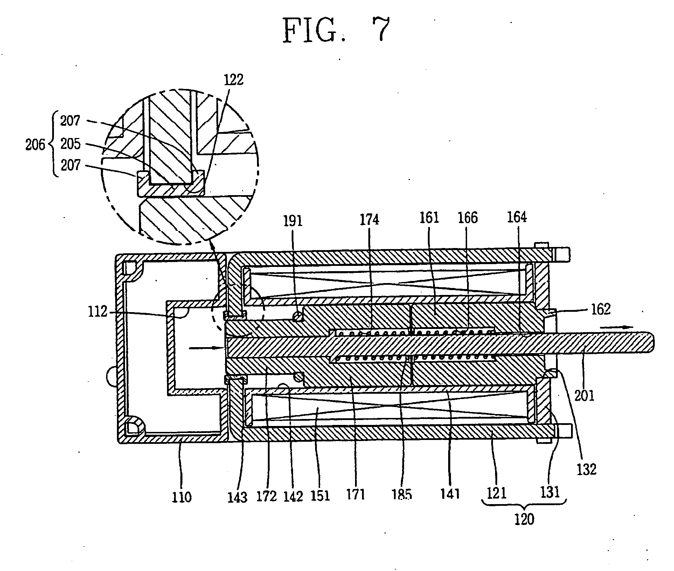

FIG. 6 is a sectional view showing an actuator according to a second embodiment of the present invention, and FIG. 7 is a view showing an operation of the actuator of FIG. 6. The same reference numerals will be given to the same parts as those of the first embodiment, and their detailed explanations will be omitted.

The actuator according to the second embodiment of the present invention comprises: a yoke 120 having a receiving space therein; a bobbin 141 disposed in the yoke 120 and having a cavity 142; a coil 151 wound on a circumference of the bobbin 141 and generating a magnetic force; a fixed core 161 fixedly disposed at one inner side of the bobbin 141; a movable core 171 disposed at another inner side of the bobbin 141; and a separating portion 205 formed of a non-metallic material, and interposed between the yoke 120 and the movable core 171 for separation therebetween.

The yoke 120 includes a frame 121 having a receiving space therein and having a 'U'-shaped section of which one side is opened, and a yoke plate 131 coupled to the frame 121 so as to cover the opened portion of the frame 121. The frame 121 and the yoke plate 131 are respectively provided with a through hole.

A housing 110 and a cover 115 are coupled to both ends of the yoke 120. The bobbin 141 and the coil 151 are received in the yoke 120 so as to be protected by the housing 110 and the cover 115.

The fixed core 161 and the movable core 171 are received at one inner side of the bobbin 141. The fixed core 161 is disposed at a side of the yoke plate 131, and the movable core 171 is disposed to be spaced from the fixed core 161. One end of the rod 201 is insertion-coupled to the center of the movable core 171, and another end of the rod 201 is slidably inserted into the fixed core 161.

A spring 185 for supplying an elastic force in a direction that the movable core 171 is spaced from the fixed core 161 is interposed between the movable core 171 and the fixed core 161.

A protrusion 172 having a radius smaller than that of the movable core 171 and extending from the movable core 171 in a longitudinal direction is formed at one end of the movable core 171. The protrusion 172 is movably inserted into a through hole 122 of the frame 121. A receiving portion 112 for receiving the protrusion 172 is disposed at the housing 110. A coupling portion162 having a radius smaller than that of the fixed core 161 and outwardly extending from the fixed core 161 is disposed at one end of the fixed core 161. The coupling portion 162 is insertion-coupled to the through hole 132 of the yoke plate 131.

A separating portion 206 for forming an air gap between the yoke 120 and the frame 121 is disposed between the yoke 120 and the frame 121. The separating portion 206 is formed of an elastic member such as a rubber. The separating portion 205 included a body 205 having a cylindrical shape and inserted into the through hole 122 of the frame 121; and a flange 207 extending from both ends of the body 205 in a radial direction. At least one of the flanges 207 is formed to elastically pass through the through hole 122 of the frame 121. The separating portion 206 may be formed of a synthetic resin into two parts, and then be coupled to the through hole 122.

A damping member 191 for preventing a contact between the movable core 171 and the separating portion 206 is disposed between the movable core 171 and the separating portion 206. The damping member 191 is formed of an elastic member such as a rubber, thereby preventing collision between the movable core 171 and the separating portion 206 when the movable core 171 is restored to its original position. The damping member 191 is formed to have an inner diameter smaller than an outer diameter of the protrusion 172, and thus is easily coupled onto a circumference of the protrusion 172 by its own elasticity without using an additional fixing means.

When power is supplied to the coil 151, the movable core 171 is moved in a direction that a magnetic resistance is decreased. Accordingly, the rod 201 is more outwardly protruding from the end of the fixed core 161. Since the movable core 171 is spaced from the yoke plate 120 by the separating portion 206 and the damping member 191, the movable core 171 can be rapidly moved to the fixed core 161. Since the protrusion 172 comes in sliding-contact with the separating portion 206, a metallic friction therebetween is prevented. When power supplied to the coil 151 is cut-off, the movable core 171 is restored to its original position by an elastic force of the spring 185. Here, the damping member 191 prevents the movable core 171 from colliding with the separating portion 206, thereby preventing damage of the separating portion 206.

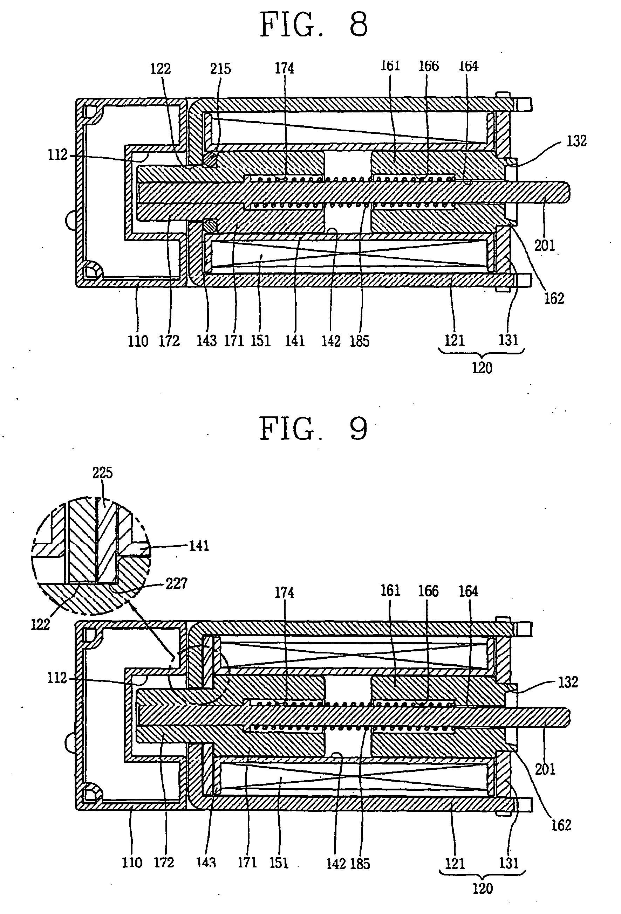

FIG. 8 is a sectional view showing an actuator according to a third embodiment of the present invention.

The actuator according to the third embodiment of the present invention comprises: a yoke 120 having a receiving space therein; a bobbin 141 disposed in the yoke 120 and having a cavity 142; a coil 151 wound on a circumference of the bobbin 141 and generating a magnetic force; a fixed core 161 fixedly disposed at one inner side of the bobbin 141; a movable core 171 disposed at another inner side of the bobbin 141; and a separating portion 215 formed of a non-metallic material, and interposed between the yoke 120 and the movable core 171 for separation therebetween.

The yoke 120 includes a frame 121 and a yoke plate 131 that form a magnetic path.

The bobbin 141 having a cylindrical shape is disposed in the yoke 120, and the movable core 171 and the fixed core 161 are received in the bobbin 141.

A protrusion 172 is formed at the movable core 171, and the protrusion 172 is insertion-coupled to a through hole 122 of the frame 121.

A separating portion 215 for forming an air gap between the yoke 120 and the movable core 171 is disposed between the yoke 120 and the movable core 171. The separating portion 215 is formed of a damping member 191 so as to form an air gap and to prevent a metallic collision between the yoke 120 and the movable core 171. The damping member 191 may be formed of an elastic member such as rubber, and may have a ring shape. The damping member 191 is formed to have an inner diameter smaller than an outer diameter of the protrusion 172, thereby being easily coupled to the protrusion 172 without an additional fixing means or tool.

By the separating portion 215, the movable core 171 is spaced from the yoke 120 with an air gap, and the movable core 171 is prevented from colliding with the yoke 120 when being restored to its original position.

FIG. 9 is a sectional view showing an actuator according to a fourth embodiment of the present invention.

The actuator according to the fourth embodiment of the present invention comprises: a yoke 120 having a receiving space therein; a bobbin 141 disposed in the yoke 120 and having a cavity 142; a coil 151 wound on a circumference of the bobbin 141 and generating a magnetic force; a fixed core 161 fixedly disposed at one inner side of the bobbin 141; a movable core 171 disposed at another inner side of the bobbin 141; and a separating portion 225 formed of a non-metallic material, and interposed between the yoke 120 and the movable core 171 for separation therebetween.

The yoke 120 includes a frame 121 and a yoke plate 131 that form a magnetic path.

The bobbin 141 having a cylindrical shape is disposed in the yoke 120, and the movable core 171 and the fixed core 161 are received in the bobbin 141.

A protrusion 172 is formed at the movable core 171, and the protrusion 172 is insertion-coupled to a through hole 122 of the frame 121.

A separating portion 225 for forming an air gap between the yoke 120 and the movable core 171 is disposed between the yoke 120 and the movable core 171. The separating portion 225 is formed to have a plate shape so as to form an air gap and to prevent a metallic collision between the yoke 120 and the movable core 171. The separating portion 225 is coupled between the frame 121 and the bobbin 141. A through hole for passing the protrusion 172 is formed at the separating portion 225. The separating portion 225 is formed of a rubber, and may be formed of a textile, a synthetic resin, etc. The aforementioned damping member 191 formed of a rubber and having a ring shape may be further disposed between the separating portion 225 and the movable core 171.

By the separating portion 225, the movable core 171 is spaced from the yoke 120 with an air gap, and the movable core 171 is prevented from colliding with the yoke 120 when being restored to its original position.

In the aforementioned embodiments, the movable core is restored to its original position by the spring. However, the movable core may be restored to its original position by a reset device.

As aforementioned, the separating portion formed of a non-metallic material is disposed between the yoke and the movable core, thereby forming an air gap between the yoke and the movable core. Accordingly, when a magnetic force is generated from the coil, the movable core is rapidly moved to the fixed core. Furthermore, when the movable core is restored to its original position, a metallic collision between the yoke and the movable core is prevented thus to prevent noise and deformation.

In the present invention, the separating portion is integrally formed at the bobbin, thereby facilitating a fabrication process and an assembly process.

In the present invention, the separating portion is integrally formed at the bobbin, and a part of the bobbin is inserted into the through hole of the yoke. Accordingly, when the movable core and the rod are moved, a metallic collision is prevented thus to prevent a noise occurrence.

In the present invention, a bushing is coupled to the through hole of the yoke, thereby preventing collision between the movable core and the yoke and preventing the movable core from slide-contacting the yoke.

In the present invention, the separating portion having a plate shape is disposed between the yoke and the bobbin so as to come in contact with the movable core, thereby forming an air gap and preventing a metallic collision..

In the present invention, the damping member is disposed between the yoke and the movable core, thereby forming an air gap therebetween and attenuating an impact when the movable core is restored to its original position. Accordingly, noise and deformation are prevented from occurring.

In the present invention, the separating portion is integrally formed at the bobbin, and the damping member is disposed between the separating portion and the movable core. Accordingly, the separating portion is prevented from being damaged by a repeated operation of the movable core.

In the present invention, the housing is disposed at one side of the yoke and the cover is disposed at another side of the yoke, thereby protecting the coil wound on the circumference of the bobbin.

## Claims

1. An actuator, comprising:
a yoke (120) having a receiving space therein;
a bobbin (141) disposed in the yoke and having a cavity;
a coil (151) wound on a circumference of the bobbin (141) and generating a magnetic force;
a fixed core (161) fixedly disposed at one inner side of the bobbin (141);
a movable core (171) disposed at another inner side of the bobbin (141); and
a separating portion (145) formed of a non-metallic material, interposed between the yoke (120) and the movable core (171) for separation therebetween **characterised in, that**
the separating portion (145) is integrally formed at the bobbin (141).

2. The actuator of claim 1, wherein the yoke comprises:
a frame (121) having a section of which one side is opened; and
a yoke plate (131) coupled to the frame (121) so as to cover the opened portion of the frame (121),
wherein a through hole (132) for inserting a part of the movable core (171) is formed at the frame (121).

3. The actuator of claim 2, wherein the separating portion (145) is protruding from inside of the cavity of the bobbin (141).

4. The actuator of claim 3, wherein an insertion portion (148) inserted into the through hole (132) is formed at the bobbin (141).

5. The actuator of claim 1, further comprising a damping member (191) interposed between the movable core (171) and the separating portion (145).

6. The actuator of claim 5, wherein the damping member (191) is formed of a rubber material.

7. The actuator of claim 5, wherein the damping member (191) is formed to have a ring shape.

8. The actuator of claim 1, wherein the separating portion member (145) is formed to have a ring shape.

9. The actuator of claim 8, wherein the separating portion (145) is formed of a rubber material.

10. The actuator of claim 1, wherein the separating portion (145) comprises:
a body (205) inserted into a through hole (132) formed at the yoke (120); and
a flange (207) outwardly extending from an end of the body (206) in a radial direction.

11. The actuator of claim 10, wherein the separating portion (145) is formed of a rubber material.

12. The actuator of claim 10, further comprising a damping member (191) coupled to the movable core (171) so as to come in contact with the separating portion (145).

13. The actuator of claim 1, wherein the separating portion (145) is formed in a plate type disposed between the yoke (120) and the bobbin (141), and a through hole (132) for passing a part of the movable core (171) is formed at a center of the separating portion (145).

14. The actuator according to claim 1, further comprising:
a spring (185) for providing an elastic force so that the movable core (171) can be separated from the fixed core (161).

15. The actuator of claim 14, wherein a through hole (132) for inserting a part of the movable core (171) is formed at the yoke (120), and the separating portion (145) is protruding from inside of the bobbin (141).

16. The actuator of claim 15, further comprising a damping member (191) coupled to a circumference of the movable core (171) so as to come in contact with the separating portion (145).

17. The actuator of claim 16, wherein the damping member (191) is a rubber ring.

18. The actuator of claim 14, wherein the separating portion (145) is implemented as a damping member (191) elastically coupled to a circumference of the movable core (171) so as to come in contact with the yoke (120).

19. The actuator of claim 14, further comprising:
a housing (110) coupled to one side of the yoke (120); and
a cover coupled to another side of the yoke (120) so that the yoke (120) can be disposed between the housing (110) and the cover.

## Patentansprüche

1. Aktuator, aufweisend:
ein Joch (120) mit einem aufnehmenden Raum darin;
einen Spulenkörper (141), der in dem Joch angeordnet ist und einen Hohlraum aufweist;
eine Spule (151), die um einen Umfang des Spulenkörpers (141) gewunden ist und eine magnetische Kraft erzeugt;
ein fester Kern (161), der fest an einer inneren Seite des Spulenkörpers (141) angeordnet ist;
ein beweglicher Kern (171), der an einer anderen inneren Seite des Spulenkörpers (141) angeordnet ist; und
ein Abstandsabschnitt (145), der aus einem nicht-metallischen Material ausgebildet ist, der zwischen dem Joch (120) und dem beweglichen Kern (171) zum Abstandbilden dazwischen angeordnet ist,
**dadurch gekennzeichnet, dass** der Abstandsabschnitt (145) einstückig an dem Spulenkörper (141) ausgebildet ist.

2. Aktuator nach Anspruch 1, wobei das Joch aufweist:
einen Rahmen (121), der einen Abschnitt aufweist von welchem eine Seite geöffnet ist; und
eine Jochplatte (131), die mit dem Rahmen (121) so gekoppelt ist, dass der geöffnete Abschnitt des Rahmens (121) abgedeckt ist,
wobei ein Durchgangsloch (132) zum Einführen eines Teils des beweglichen Kerns (171) an dem Rahmen (121) ausgebildet ist.

3. Aktuator nach Anspruch 2, wobei der Abstandsabschnitt (145) von innen aus dem Hohlraum des Spulenkörpers (141) ragt.

4. Aktuator noch Anspruch 3, wobei ein Einführungsabschnitt (148), der in das Durchgangsloch (132) eingeführt ist, an dem Spulenkörper (141) ausgebildet ist.

5. Aktuator nach Anspruch 1, weiterhin aufweisend ein Dämpfungsbauteil (191), das zwischen dem beweglichen Kern (171) und dem Abstandsabschnitt (145) eingeschoben ist.

6. Aktuator nach Anspruch 5, wobei das Dämpfungsbauteil (191) aus einem Gummimaterial ausgebildet ist.

7. Aktuator nach Anspruch 5, wobei das Dämpfungsbauteil (191) ausgebildet ist, um eine Ringform aufzuweisen.

8. Aktuator nach Anspruch 1, wobei das Abstandabschnittsbauteil (145) ausgebildet ist, um eine Ringform aufzuweisen.

9. Aktuator nach Anspruch 8, wobei der Abstandsabschnitt (145) aus einem Gummimaterial ausgebildet ist.

10. Aktuator nach Anspruch 1, wobei der Abstandsabschnitt (145) aufweist:
einen Körper (205), der in ein Durchgangsloch (132), das an dem Joch (120) ausgebildet ist, eingeführt wird; und
einen Flansch (207), der sich auswärts von einem Ende des Körpers (206) in einer radialen Richtung erstreckt.

11. Aktuator nach Anspruch 10, wobei der Abstandsabschnitt (145) aus einem Gummimaterial ausgebildet ist.

12. Aktuator nach Anspruch 10, weiterhin aufweisend ein Dämpfungsbauteil (191), das so mit dem beweglichen Kern (171) gekoppelt ist, dass es mit dem Abstandsabschnitt (145) in Kontakt kommt.

13. Aktuator nach Anspruch 1, wobei der Abstandsabschnitt (145) in einem Plattentyp, der zwischen dem Joch (120) und dem Spulenkörper (141) angeordnet ist, ausgebildet ist, und wobei ein Durchgangsloch (132) zum Passieren eines Teils des beweglichen Kerns (171) an einem Mittelpunkt des Abstandsabschnitts (145) ausgebildet ist.

14. Aktuator nach Anspruch 1, weiterhin aufweisend:
eine Feder (185) zum Bereitstellen einer elastischen Kraft, so dass der bewegliche Kern (171) von dem festen Kern (161) getrennt werden kann.

15. Aktuator nach Anspruch 14, wobei ein Durchgangsloch (132) zum Einführen eines Teils des beweglichen Kerns (171) an dem Joch (120) ausgebildet ist, und wobei der Abstandsabschnitt (145) von innen aus dem Spulenkörper (141) ragt.

16. Aktuator nach Anspruch 15, weiterhin aufweisend ein Dämpfungsbauteil (191), das mit einem Umfang des beweglichen Kerns (171) so gekoppelt ist, dass es mit dem Abstandsabschnitt (145) in Kontakt kommt.

17. Aktuator nach Anspruch 16, wobei das Dämpfungsbauteil (191) ein Gummiring ist.

18. Aktuator nach Anspruch 14, wobei der Abstandsabschnitt (145) als ein Dämpfungsbauteil (191) implementiert ist, das so elastisch mit einem Umfang des beweglichen Kerns (171) gekoppelt ist, dass es mit dem Joch (120) in Kontakt kommt.

19. Aktuator nach Anspruch 14, weiterhin aufweisend:
ein Gehäuse (110), das mit einer Seite des Jochs (120) gekoppelt ist; und
eine Abdeckung, die mit einer anderen Seite des Jochs (120) so gekoppelt ist, dass das Joch (120) zwischen dem Gehäuse (110) und der Abdeckung angeordnet werden kann.

## Revendications

1. Un actionneur, comprenant:
une culasse (120) comportant à l'intérieur un espace de réception;
une bobine (141) disposée dans la culasse et comportant une cavité;
un bobinage (151) enroulé sur une circonférence de la bobine (141) et générant une force magnétique;
un noyau fixe (161) disposé fixement sur un côté intérieur de la bobine (141);
un noyau mobile (171) disposé sur un autre côté intérieur de la bobine (141); et
une partie de séparation (145) formée d'un matériau non métallique, interposée entre la culasse (120) et le noyau mobile (171) pour les séparer entre eux,
**caractérisé en ce que** la partie de séparation (145) est formée monobloc avec la bobine (141).

2. L'actionneur de la revendication 1, dans lequel la culasse comprend:
un châssis (121) présentant une section dont un côté est ouvert; et
une plaque de culasse (131) couplée au châssis (121) de manière à recouvrir la partie ouverte du châssis (121),
dans lequel un trou traversant (132) pour l'insertion d'une partie du noyau mobile (171) est formé sur le châssis (121).

3. L'actionneur de la revendication 2, dans lequel la partie de séparation (145) est saillante depuis l'intérieur de la cavité de la bobine (141).

4. L'actionneur de la revendication 3, dans lequel une partie d'insertion (148) insérée dans le trou traversant (132) est formée sur la bobine (141).

5. L'actionneur de la revendication 1, comprenant en outre un organe d'amortissement (191) interposé entre le noyau mobile (171) et la partie de séparation (145).

6. L'actionneur de la revendication 5, dans lequel l'organe d'amortissement (191) est formé d'un matériau de caoutchouc.

7. L'actionneur de la revendication 5, dans lequel l'organe d'amortissement (191) est formé de manière à présenter une forme annulaire.

8. L'actionneur de la revendication 1, dans lequel l'organe de la partie de séparation (145) est formé de manière à présenter une forme annulaire.

9. L'actionneur de la revendication 8, dans lequel la partie de séparation (145) est formée d'un matériau en caoutchouc.

10. L'actionneur de la revendication 1, dans lequel la partie de séparation (145) comprend:
un corps (205) inséré dans un trou traversant (132) formé sur la culasse (120); et
un flasque (207) s'étendant à l'extérieur à partir d'une extrémité du corps (206) dans une direction radiale.

11. L'actionneur de la revendication 1, dans lequel la partie de séparation (145) est formée d'un matériau en caoutchouc.

12. L'actionneur de la revendication 10, comprenant en outre un organe d'amortissement (191) couplé au noyau mobile (171) de manière à venir en contact avec la partie de séparation (145).

13. L'actionneur de la revendication 1, dans lequel la partie de séparation (145) est formée dans un type de plaque disposée entre la culasse (120) et la bobine (141), et un trou traversant (132) pour faire passer une partie du noyau mobile (171) est formé en un centre de la partie de séparation (145).

14. L'actionneur de la revendication 1, comprenant en outre:
un ressort (185) pour produire une force élastique de sorte que le noyau mobile (171) puisse être séparé du noyau fixe (161).

15. L'actionneur de la revendication 14, dans lequel un trou traversant (132) pour l'insertion d'une partie du noyau mobile (171) est formé sur la culasse (120), et la partie de séparation (145) fait saillie depuis l'intérieur de la bobine (141).

16. L'actionneur de la revendication 15, comprenant en outre un organe d'amortissement (191) couplé à une circonférence du noyau mobile (171) de manière à venir en contact avec la partie de séparation (145).

17. L'actionneur de la revendication 16, dans lequel l'organe d'amortissement (191) est un anneau de caoutchouc.

18. L'actionneur de la revendication 14, dans lequel la partie de séparation (145) est implémentée sous forme d'un organe d'amortissement (191) élastiquement couplé à une circonférence du noyau mobile (171) de manière à venir en contact avec la culasse (120).

19. L'actionneur de la revendication 14, comprenant en outre:
un boîtier (110) couplé à un côté de la culasse (120); et
un couvercle couplé à un autre côté de la culasse (120) de sorte que la culasse (120) puisse être disposée entre le boîtier (110) et le couvercle.
